(19) Europäisches Patentamt
European Patent Office
Office européen des brevets

(11) **EP 4 261 745 A1**

(12) **EUROPEAN PATENT APPLICATION**

(43) Date of publication:
**18.10.2023 Bulletin 2023/42**

(21) Application number: **23150205.5**

(22) Date of filing: **03.01.2023**

(51) International Patent Classification (IPC):
*G06N 3/045* (2023.01)     *G06N 3/0499* (2023.01)
*G06N 20/00* (2019.01)     *G06N 3/0442* (2023.01)
*G06F 17/14* (2006.01)

(52) Cooperative Patent Classification (CPC):
**G06N 3/045; G06F 17/142; G06F 17/16;
G06N 3/0442; G06N 3/0499; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.04.2022 GR 20220100326**

(71) Applicant: **Samsung Electronics Co., Ltd.
Gyeonggi-do 16677 (KR)**

(72) Inventors:
• **FAN, Hongxiang
Chertsey, KT16 0RS (GB)**

• **CHAU, Chun Pong
Chertsey, KT16 0RS (GB)**
• **VENIERIS, Stylianos
Chertsey, KT16 0RS (GB)**
• **KOURIS, Alexandros
Chertsey, KT16 0RS (GB)**
• **LEE, Royson
Chertsey, KT16 0RS (GB)**
• **ABDELFATTAH, Mohamed S
Chertsey, KT16 0RS (GB)**

(74) Representative: **Appleyard Lees IP LLP
15 Clare Road
Halifax HX1 2HY (GB)**

(54) **APPARATUS FOR ACCELERATING NEURAL NETWORK COMPUTATIONS**

(57) Broadly speaking, the present techniques generally relate to an apparatus for accelerating neural network computations. In particular, the present application relates to a hardware accelerator, or processing unit, for accelerating machine learning, ML, model computations.

FIGURE 8

**Description**

**Field**

The present application generally relates to an apparatus for accelerating neural network computations. In particular, the present application relates to a hardware accelerator, or processing unit, for accelerating machine learning, ML, model computations.

**Background**

The advances of deep learning have led to various neural networks (NNs) capable of achieving state-of-the-art accuracy on many AI tasks. Among these, recurrent neural networks (RNNs), such as Gated Recurrent Units (GRUs) and Long Short-Term Memory (LSTM) networks, have demonstrated their advantages in addressing sequencing transduction and modelling problems.

However, the recurrence property of these models introduces two drawbacks: (1) the limited capacity of utilizing the past or external knowledge, which causes long-range information loss; and (2) the sequential nature of RNNs, which hinders their parallelisation in hardware and slows down their processing speed.

Recently, the attention mechanism has been proposed to address these shortcomings. It can process long sequences of data in parallel to capture long-range information. Based on this principle, different attention-based NNs, such as BERT and GPT, have been proposed that achieve state-of-the-art accuracy in various natural language processing (NLP) tasks.

The benefits of attention-based NNs, however, come at a cost: the high degree of parallelism significantly increases the amount of parameters and computation, resulting in a large overhead on their speed and power consumption. To alleviate this, various hardware accelerators have been proposed. However, there are several issues in these designs. For example, these accelerators only focus on optimizing either FFNs or the attention mechanism. Without jointly optimizing both parts, these hardware designs lack scalability when accelerating the end-to-end attention-based NNs with different input lengths. Furthermore, while optimizing the attention mechanism, most of the existing designs dynamically detect and prune the redundant computation at runtime to achieve high sparsity on specific datasets and networks. However, the generality of these dynamic approaches needs to be further tested as their performance gain may vary among different datasets and network architectures. Further still, since the sparsity patterns introduced by these dynamic approaches are unstructured, dynamic hardware controllers are required in order to exploit the sparsity. Nevertheless, such complicated controllers often contain a large amount of clocking elements whose cost increases as the transistor-size reduces. As such, the performance or energy improvement brought by these dynamic methods may be diminished due to the hardware overhead of these dynamic controllers.

Therefore, the present applicant has recognised the need for an improved hardware acceleration mechanism for machine learning computations.

**Summary**

Demanding data-intensive applications like machine learning, and the need for high-speed computing, have resulted in a need for "accelerators" to offload work from general purpose processors. An accelerator is a hardware device which partners with general purpose processors, such as a CPU, to boost the speed at which data is processed, and therefore improve the performance of the processor. This is particularly useful where larger, more powerful processors are not able to be used within a device, such as within mobile communication devices, smartphones, home assistant devices, robotic devices, battery-operated devices, and so on.

In a first approach of the present techniques, there is provided a processing unit for accelerating machine learning, ML, model computations, the processing unit comprising: a first processor for accelerating computations involving a sparse matrix, the sparse matrix having a butterfly sparsity pattern. The first processor may be used to accelerate computations of any layer of the ML model, as long as the computations involve matrices having a butterfly sparsity pattern. For example, the first processor may be used to accelerate computations of attention layers and/or linear layers of the ML model, when the butterfly sparsity pattern is adopted/applied to those layers. The ML model may comprise one or more further layers which do not adopt butterfly sparsity, but the first processor is not used to accelerate computations of these further layers.

The first processor is also referred to herein as a "butterfly processor", because the first processor operates on data using a butterfly sparsity pattern. That is, the first processor accesses data from an input matrix according to a butterfly sparsity pattern, to reduce the number of computations that need to be performed, without losing accuracy.

The first processor may comprise a plurality of engines, also referred to herein as "butterfly engines", used to accelerate the computations involving a sparse matrix.

Each butterfly engine may comprise an adaptable memory system and a plurality of adaptable butterfly units, wherein each butterfly unit may be configurable to perform a specific computation.

Each butterfly unit may be configurable to perform one or both of a Fast Fourier Transform, and a linear transformation. This is advantageous because many conventional techniques are able to perform either attention-based operations (i.e. linear transformations) or Fast Fourier Transform based operations, but not both. The butterfly unit of the present techniques is configurable, at runtime, to perform either operation based on which layer of the ML model the processing unit is being used for.

Each butterfly unit may comprise a plurality of multiplexers arranged to select inputs required to perform the specific computation. This enables the butterfly unit to be adapted/configured to perform the specific computation.

In one example, each butterfly unit may comprise: four real-number multipliers, arranged to multiply inputs to perform the specific computation; two real-number adders or subtractors, arranged to operate on outputs of the real-number multipliers; and two complex-number adders or subtractors, arranged to operate on outputs of the real-number adders or subtractors. For example, to perform a linear transformation computation, all four of the real-number multipliers may be used to perform four real-number multiplications, whereas to perform a FFT computation, all four of the real-number multipliers may be used to perform four complex-number multiplications. Thus, the same hardware may be configured, in real-time, to suit the computation.

Each butterfly unit may comprise: eight multiplexers, arranged to receive the inputs for the specific computation, and to select the inputs required to perform the specific computation; and two de-multiplexers, arranged between the two real-number adders or subtractors and the two complex-number adders or subtractors, to provide outputs of the butterfly unit.

The memory system of the butterfly engine may comprise a serial-to-parallel module arranged to access data for the specific computation based on the butterfly sparsity pattern.

The processing unit may further comprise: a second processor for receiving outputs from the first processor and for performing post-processing using the received outputs. The second processor is also referred to herein as a "post processor".

As noted above, the first processor may be used to accelerate computations of any layer of the ML model, as long as the computations involve matrices having a butterfly sparsity pattern. For example, the first processor may be used to accelerate computations of attention layers and/or linear layers of the ML model, when the butterfly sparsity pattern is adopted/applied to those layers. However, when the ML model comprises at least one attention layer requiring computations that do not involve or use a sparse matrix having a butterfly sparsity pattern, the processing unit may further comprise a third processor for performing some operations required by an attention mechanism, i.e. for performing operations required by this/these attention layer(s). The third processor is also referred to herein as an "attention processor". That is, when the ML model comprises even a single attention layer that is vanilla or conventional, i.e. which does not use butterfly sparsity, the third processor is used to execute that attention layer when the model is executed.

The third processor may comprise a plurality of attention engines, wherein each attention engine may comprise: a query key, QK, unit for implementing matrix multiplications between query and key matrices; and a score value, SV, unit for receiving outputs from the QK unit and multiplying the outputs with value vectors to output results of an attention layer of the ML model.

As mentioned above, the plurality of butterfly engines, and therefore the butterfly processor, may be configurable in real-time to perform the specific computation. The butterfly processor may be reconfigurable and adaptable. Thus, the butterfly processor may be configured at runtime to accelerate different layers using a single piece of hardware. This makes the present hardware accelerator efficient, as it can be used to accelerate different and multiple layers of the ML model.

During runtime, the processing unit may receive an input for processing by the ML model, and may use the first processor to perform a Fast Fourier Transform computation using the received input.

In a second approach of the present techniques, there is provided a computer-implemented method for accelerating machine learning, ML, model computations using the processing unit described herein, the method comprising: receiving an input matrix for processing by the ML model; and using the first processor of the processing unit to: access data from the input matrix based on a butterfly sparsity pattern; configure the plurality of butterfly units of the first processor to perform a Fast Fourier Transform computation; and perform a Fast Fourier Transform computation using the accessed data.

The method may further comprise: using the third processor of the processing unit to: perform an attention mechanism computation, that does not involve a sparse matrix having a butterfly sparsity pattern, using the input matrix and an output of the first processor.

In a related approach of the present techniques, there is provided a computer-readable storage medium comprising instructions which, when executed by a processor, causes the processor to carry out the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The methods described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/or may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

**Brief description of drawings**

Implementations of the present techniques will now be described, by way of example only, with reference to the accompanying drawings, in which:

Figure 1 is a diagram illustrating a structure of a Transformer network;

Figure 2 shows an algorithm used by a mult0head attention module to perform liner transformation and attention;

Figure 3 is a key for the notation used herein;

Figure 4 shows latency breakdown of a Transformer with different input lengths on GPU and CPU;

Figure 5 is a diagram showing basic sparsity patterns in existing efficient attention-based NNs;

Figure 6 is a schematic diagram of a network structure of FABNet;

Figure 7 is a table illustrating combinations of sparsity patterns in different variants;

Figure 8 is a hardware overview of an adaptable butterfly accelerator described herein;

Figure 9a shows hardware architecture of the adaptable butterfly accelerator;

Figure 9b shows dataflow of a butterfly linear transform;

Figure 9c shows dataflow of a Fast Fourier Transform;

Figure 10 shows the butterfly memory system with adaptable address mapping strategies;

Figures 11a and 11b show adaptable fine-grained pipeline strategies;

Figures 12a-c show bank conflicts in column-major and row-major orders;

Figure 13 shows a data layout scheme and hardware design of S2P module;

Figure 14 shows an example of a 16-input butterfly;

Figure 15 shows a hardware architecture of Index Coalescing module;

Figure 16 is a table showing accuracy performance of different models on LRA;

Figure 17 shows experimental data on the speedup breakdown compared to the baseline design;

Figure 18 shows the compression rate of the present applicant's optimized FABNet over the vanilla Transformer and FNet in terms of floating-point operations (FLOPS) and model size (number of parameters).

Figure 19 shows experimental data comparing performance against (a) high-end and (b) edge GPUs and CPUs; and

Figure 20 shows a comparison of the present applicant's techniques with existing Transformer accelerators in terms of latency, power and energy efficiency;

Figure 21 shows experimental data on the achieved latency for different input sequence lengths when varying the available off-chip memory bandwidth;

Figure 22 shows a flowchart describing a method for hardware acceleration; and

Figure 23 is a block diagram of an apparatus 200 incorporating the accelerator of the present techniques.

## Detailed description of drawings

Broadly speaking, the present techniques generally relate to an apparatus for accelerating neural network computations. In particular, the present application relates to a hardware accelerator, or processing unit, for accelerating machine learning, ML, model computations.

To address the aforementioned issues, the present applicant adopts butterfly sparsity to accelerate attention-based models with at least three novel aspects: i) Fine-grained structured regularity, which posses regular data accesses to optimize both memory and compute efficiency; ii) Static sparsity pattern, which avoids the need of designing a dynamic controller in hardware; iii) Sparsity exploitation on both attention and linear layers, which allows scalable end-to-end acceleration of attention-based NNs. The present applicant therefore proposes FABNet, a hardware-friendly model for FFT, Attention and ButterflyNet. To fully exploit the sparsity in hardware, the present applicant proposes an adaptable butterfly accelerator that can be configured at runtime via dedicated hardware control to accelerate different layers using one unified engine, significantly improving hardware efficiency. To push the performance limit, the present applicant jointly optimized the model and hardware via a co-design approach.

Based on their network structure, attention-based NNs can be classified into three categories: (i) encoder-decoder, (ii) encoder-only, and (iii) decoder-only networks. The encoder-decoder NNs are mainly designed for sequence-to-sequence tasks, such as machine translation.

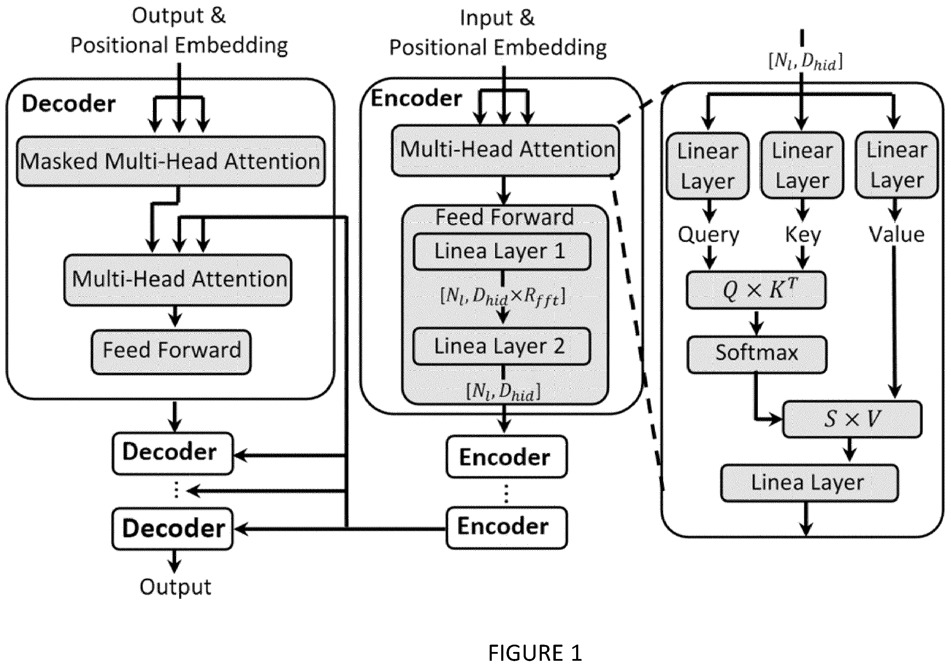

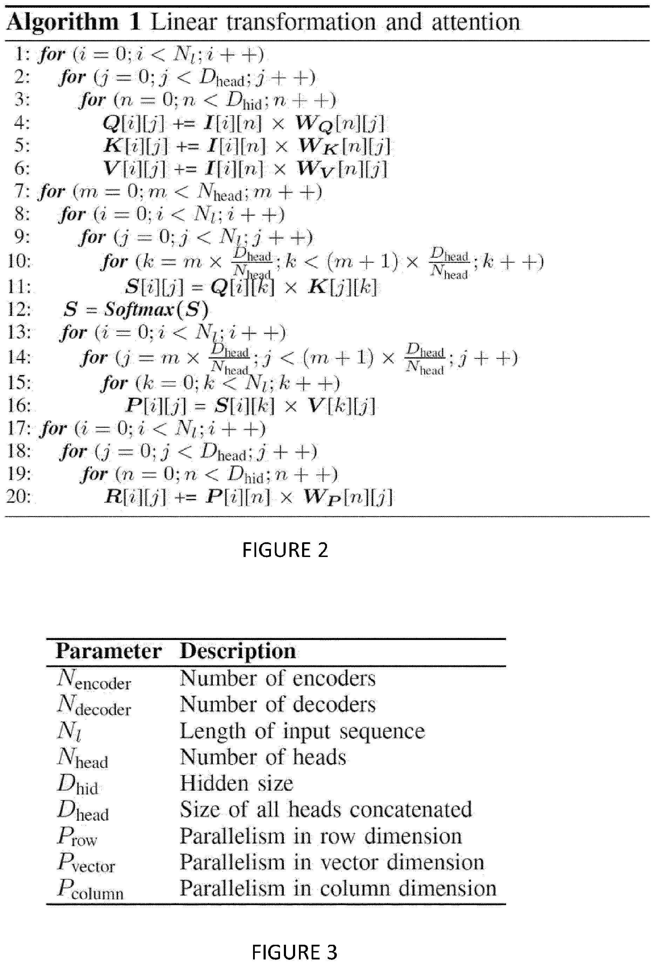

Figure 1 is a diagram illustrating a structure of a Transformer network. One of the most widely-used encoder-decoder network is the Transformer, which is constructed by a stack of encoder and decoder blocks, as illustrated in Figure 1. Figure 1 illustrates the Transformer's structure, where $N_1$, $D_{hid}$ and $R_{fft}$ represent input length, hidden size and FFN expand ration respectively. Each encoder starts with a multi-head attention module, followed by a feed-forward network (FFN) consisting of two linear (fully connected) layers. Finally, residual addition and layer normalization (LN) is used after FFN. Figure 2 shows an algorithm used by a multihead attention module to perform liner transformation and attention and presents the pseudocode of the multi-head attention module. Figure 3 Figure 3 is a key for the notation used herein, and summarizes the notation used throughout the present application. The inputs are first mapped to query (Q), key (K) and value (V) matrices through three different linear layers. The query matrix is then multiplied with $K^T$, followed by a softmax operation to get the score (S) matrix. The generated S is multiplied with V, and the resultant matrix will flow into another linear layer, which generates the final output matrix of the multihead attention. Similarly, the decoder employs two multi-head attention modules and one FFN, where the difference is that the inputs of the query and key vectors in the second attention module come from the outputs of the last encoder.

Based on the original encoder-decoder structure of Transformer, different variants have been proposed. The encoder-only networks, such as BERT and XLM are also called autoencoding models and have been widely applied to NLP tasks, such as sequence classification. The Vision Transformer (ViT) also lies in this category and introduces one extra linear projection layer at the beginning. Their encoder layers correspond to the encoder part of the original Transformer. Finally, the decoder-only networks represent the autoregressive models designed for NLP tasks, such as language modelling. GPT is a typical decoder-only model that corresponds to the decoder part of the original Transformer. Although the present applicant focuses on encoder-only networks, the hardware design is flexible and applicable to decoders too.

*Butterfly Matrices and FFT.* Despite the impressive accuracy attained using attention-based NNs, these models are expensive and not scalable the self-attention mechanism in the Transformer scales quadratically in compute and memory as a function of the input sequence length. As a result, numerous works adopt structured linear mappings, such as sparse and low-rank matrices to approximate the attention matrices in the attention components and/or the weight matrices in the feed-forward layers. Choosing an appropriate structure for each linear mapping, however, is application-dependent, often requiring domain expertise and entailing an arduous process of having to hand-pick solutions as different structures have different trade-offs in performance and speed.

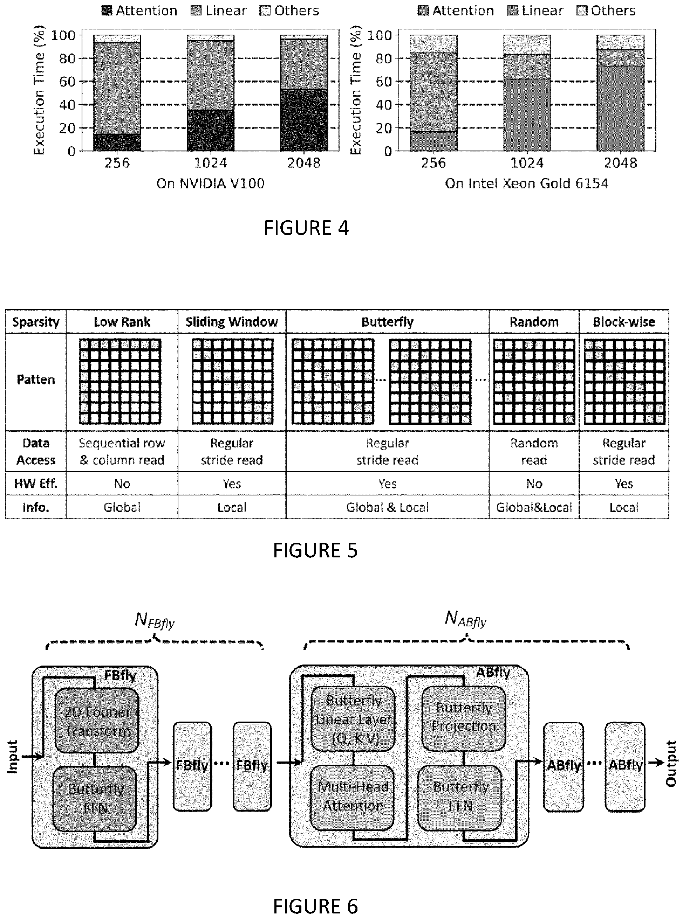

Generally speaking, sparse matrices are matrices that contain mostly zero values, i.e. most of the values/elements are zero. These are useful because they reduce the amount of computational processing that needs to be performed when performing matrix-based computations (such as Fourier transforms or fast Fourier transforms). As only the non-zero elements of a sparse matrix are stored, the amount of memory required to store the matrix is reduced (compared to a dense matrix). It is desirable to transform data into sparse matrices to make computations less complex/time consuming. As mentioned below in relation to Figure 5, there are many different types of sparse matrix, which have their advantages and disadvantages. For example, a random sparsity pattern is where random values in the matrix are zero. Although this is sparse, it may be difficult for a processor to process because random values of the matrix will need to be accessed and read. For instance, to fully utilize the sparsity in the random pattern, complex dynamic controllers are required to achieve a load-balanced execution on different hardware engines. The extra overhead of such controllers may counteract the improvement brought by skipping sparse operations, especially when the transistor-size goes down.

To counteract this, many works have utilized butterfly matrices, which are universal representations of structured matrices and are practically efficient due to their simple recursive structure. Specifically, each butterfly matrix $W_{Bfly}$ of size N encodes the recursive divide-and-conquer structure of the Fast Fourier Transform (FFT) and, hence, can be expressed as the product of sparse butterfly factor matrices as follows:

$$W_{Bfly} = \left( W'_{N/2} \begin{bmatrix} W'_{N/2} & 0 \\ 0 & W'_{N/2} \end{bmatrix} \cdots \begin{bmatrix} W'_2 & \cdots & 0 \\ \vdots & \ddots & \vdots \\ 0 & \cdots & W'_2 \end{bmatrix} \right)$$

where each $W'_N$, named a butterfly factor is a 2x2 block matrix of diagonal matrixes, $B^i$ with size N/2, whose entries can be trained via gradient-based methods:

$$W'_N = \begin{bmatrix} B^1_{N/2} & B^2_{N/2} \\ B^3_{N/2} & B^4_{N/2} \end{bmatrix}$$

In other words, butterfly matrices arise from the Fast Fourier Transform algorithm. The FFT algorithm works by performing the following steps: (1) separating the odd and even indices of the input, (2) performing an FFT on each half of the input, and (3) recombining pairs of indices using a 2x2 matrix. The sparsity pattern of this FFT algorithm is analysed, which shows that a recursive factorisation of the FFT matrix occurs. The factorisation's sparsity pattern is called a butterfly matrix, and each individual sparse matrix in the product (see equation above) is a butterfly factor. As shown in Figure 5, the sparsity pattern of each butterfly matrix $W_{Bfly}$ differs but is fixed.

Due to its expressiveness in representing structured matrices and approximating unstructured data, butterfly matrices and their variants have found success in replacing attention and weight matrices, considerably improving the accuracy and efficiency of attention-based NNs.

Besides attention and weight matrices, some works have explored replacing the entire attention mechanism with more efficient counterparts. A prominent example is FNet, in which the self-attention modules are replaced with 2D Discrete Fourier Transform (DFT) operations. Specifically, for each input, a 1D DFT is applied along the sequence dimension and another 1D DFT is applied along the hidden dimension, keeping only the real component of the resulting output. As the use of DFT facilitates information flow across for all embeddings, it results in a similar performance as compared to the use of vanilla self-attention layers, but at a significant reduction in latency and memory.

On the algorithmic front, the proposed FABNet utilizes a mixture of these techniques - FFT and butterfly matrices - to outperform existing works in terms of accuracy. Notably, since FFT matrices are a special case of butterfly matrices with $B^1_{N/2}, B^3_{N/2}$, being identity matrices and $B^2_{N/2}, B^4_{N/2}$, as twiddle factors, both the FFT and butterfly matrices possess the recursive butterfly structure. Therefore, it is possible to unify a computational and data access pattern, and then devise a single hardware engine to accelerate both FFT and butterfly-based operations with high hardware efficiency.

*Latency Breakdown and Motivation.* The majority of previous Transformer-based accelerators focused on optimizing a subcomponent of the entire model, resulting in suboptimal performance gains. In addition, execution time is heavily dependent on the input length and thus varies in different subcomponents, reducing the scalability with respect to input length and narrowing the deployability of these solutions. Figure 4 shows the latency breakdown of the Transformer's subcomponents for varying input lengths on both GPU and CPU with batch size of 8 and 1, respectively.

Specifically, the Transformer architecture is split into three main subcomponents: attention layers, linear layers, and other operations, e.g. softmax, layer normalization, residual connections, matrix transformations, and IO operations. Notably, on the CPU, linear layers take up a significant portion of execution time, up to 71.61%, for all input lengths. In contrast, on the GPU, executing linear layers takes up the majority of the total execution time only when the input layer is small, e.g. 40.98% and 37.9% for input lengths of 128 and 256, respectively. Therefore, works that focus on optimizing the attention layers can only be effective in the limited case of small input lengths.

On the other hand, accelerators that focus on solely optimizing linear layers also suffer from the same drawbacks in certain commonplace scenarios when the input length is large. For instance, executing attention layers on the GPU consumes up to 46.15% of the total execution time when the input length is 512.

Naively adopting a combination of previous works to optimize both the linear and attention subcomponents, however, would require the instantiation of two separate engines, resulting in excessively high resource consumption. As such, there is a gap in designing an accelerator for scalable all-purpose Transformer-based models.

The present applicant addresses this challenge by proposing an adaptable engine that accelerates both the attention and linear layers through its runtime reconfigurability, thus leading to a considerable decrease in resource consumption with negligible accuracy loss.

*Algorithm Optimization*

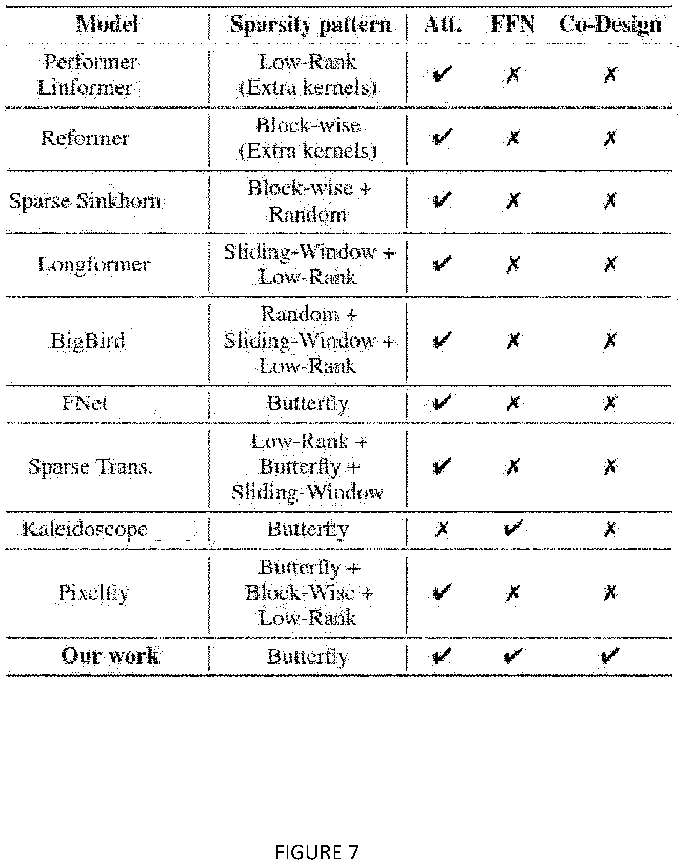

*Computational Analysis of Sparsity Patterns.* Figure 5 is a diagram showing basic sparsity patterns in existing efficient attention-based NNs. Various pruning schemes have been proposed to reduce the computational complexity of attention-based NNs, leading to different efficient models. By analysing the computational patterns of these variants, five basic sparsity patterns are defined as shown in Figure 5 (i) low rank, (ii) sliding window, (iii) butterfly, (iv) random and (v) block-wise pattern. It is observed that the sparsity in these variants can be expressed as different combinations of the basic sparsity patterns, as summarized in Figure 7. The rationale behind using multiple sparsity patterns within each variant is mainly to compensate for the accuracy loss. For example, Pixelfly introduces an additional low-rank sparsity pattern to increase the expressiveness of their flat block-wise butterfly pattern and improve accuracy (B. Chen et al, "Pixelated Butterfly: Simple and Efficient Sparse training for Neural Network Models" in International Conference on Learning Representations (ICLR), 2022).

Different sparsity patterns exhibit diverse data access patterns, which calls for custom hardware support. However, supporting multiple sparsity patterns may complicate the hardware design. For instance, to fully utilize the sparsity in the random pattern, complex dynamic controllers are required to achieve a load-balanced execution on different hardware engines. The extra overhead of such controllers may counteract the improvement brought by skipping sparse operations, especially when the transistor-size goes down.

The present applicant aims to find a hardware-friendly sparsity pattern that: (1) has structured data access patterns to simplify the memory design, (2) achieves satisfactory algorithmic performance without the help of other sparsity patterns, and (3) is applicable to both the attention mechanism and FFNs to achieve scalable improvement.

Among the five sparsity patterns in Figure 5, the random pattern is first excluded for two reasons: (1) it requires complicated controllers with excessive hardware overhead and (2) its performance gain cannot be guaranteed as the sparsity may vary substantially among different datasets and tasks. In addition, as summarized in Figure 7 the sliding-window pattern always requires another sparsity to compensate for the accuracy loss as it only captures the local relationship inside each window. Moreover, although some variants adopt a single low-rank or block-wise sparsity pattern with satisfactory algorithmic performance, they require extra algorithmic operations and dedicated computational kernels e.g. the locality-sensitive hashing (LSH) in Reformer during inference, which puts a large overhead at the hardware level. As a result, in the next section the focus is on exploiting the butterfly sparsity pattern to accelerate attention-based NNs.

*Unified Butterfly Pattern for Attention and FFNs.* Figure 6 is a schematic diagram of a network structure of FABNet. The butterfly pattern has demonstrated its effectiveness and generality in approximating linear transformations. Furthermore, it has been shown the potential of simplifying the computation by replacing the entire attention layer with Fourier transform. To maximize the ability to approximate the computation with acceptable algorithm performance, two basic building blocks for scalable inference are proposed: (1) the Attention Butterfly (ABfly), and (2) Fourier Butterfly (FBfly) blocks.

In the ABfly block, the multi-head attention mechanism is kept, but all the linear layers are compressed using butterfly factorization. To further reduce the amount of computation and parameters, the FBfly block replaces the entire attention mechanism with a 2D Fourier transform layer. Although FBfly is less compute and memory intensive than ABfly, the use of the Fourier transform layer may also affect the accuracy. To recover the algorithm performance when needed, a butterfly-based network called FABNet is proposed that introduces a hybrid of the ABfly and FBfly blocks, as depicted in Figure 6. There are $N_{FBfly}$ FBfly blocks at the beginning, and $N_{ABfly}$ number of ABfly blocks at the bottom. With this setup, both $N_{FBfly}$ and $N_{ABfly}$ are exposed as user-defined hyper-parameters, forming a trade-off between the algorithm and hardware performance. To balance this trade-off, a co-design framework is proposed to explore the design space of both neural architecture and hardware design according to users' requirements.

*Hardware Accelerator*

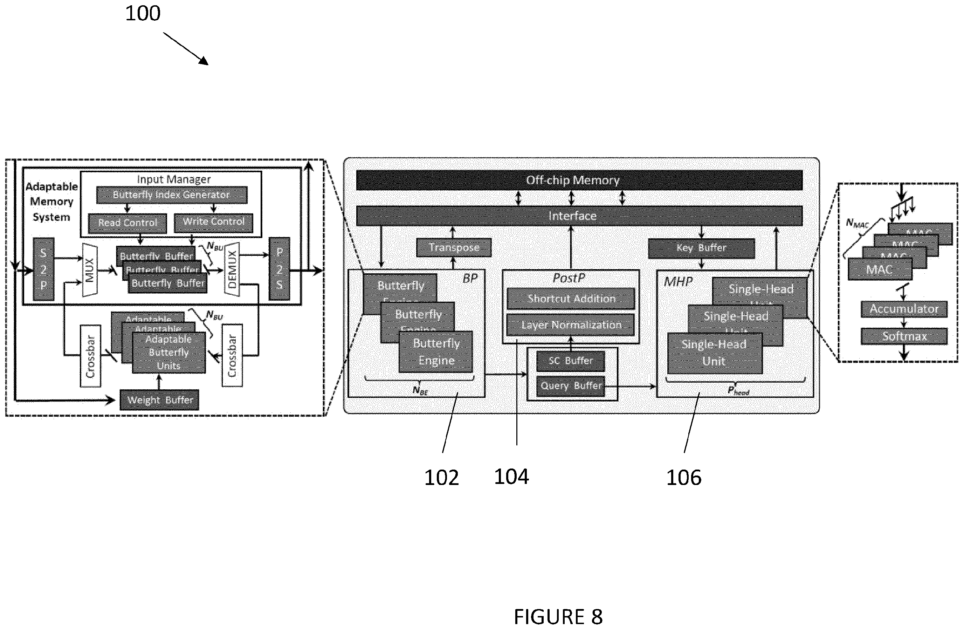

*Architecture Overview.* Figure 8 shows the proposed hardware accelerator or processing unit 100 for accelerating machine learning model computations. The processing unit 100 comprises a first processor 102, also referred to herein as a Butterfly Processor (BP). The first processor 102 is for accelerating computations involving a sparse matrix, the sparse matrix having a butterfly sparsity pattern.

The BP 102 consists of $P_{BE}$ number of Butterfly Engines (BEs), which are used to accelerate the computations that involve butterfly patterns, including both FFT and butterfly linear transformations. That is, the first processor 102 may comprise a plurality of butterfly engines used to accelerate the computations involving a sparse matrix. Each butterfly engine may comprise a memory system and a plurality of butterfly units, wherein each butterfly unit may be configurable to perform a specific computation.

Each butterfly unit may comprise a plurality of multiplexers arranged to select inputs required to perform the specific computation, as explained in more detail below.

The processing unit 100 comprises a second processor 104, also referred to herein as a Post-processing Processor (PostP), the off-chip memory and different on-chip buffers. That is, the processing unit 100 comprises a second processor for receiving outputs from the first processor and for performing post-processing using the received outputs. The PostP module 104 is responsible for executing the layer normalization and shortcut (SC) addition. To ease the on-chip memory consumption, the intermediate results between different FFT and butterfly linear transformation operations are transferred back to the off-chip memory. All the on-chip buffers utilize double-buffering in order to overlap the data transfer with the computation.

The processing unit 100 may comprise a third processor 106, also referred to herein as an Attention Processor (AP). When the ML model comprises at least one attention layer requiring computations that do not involve a sparse matrix having a butterfly sparsity pattern, the third processor 106 is used to perform operations required by this at least one attention layer. The AP 106 contains $P_{AE}$ number of Attention Engines (AEs), and each AE is composed of one QK unit and one SV unit. The QK unit is designed to implement the softmax and the matrix multiplication between queries and keys. The SV receives the outputs from the QK unit, and multiplies the results with value vectors to generate the final results of the attention layer.

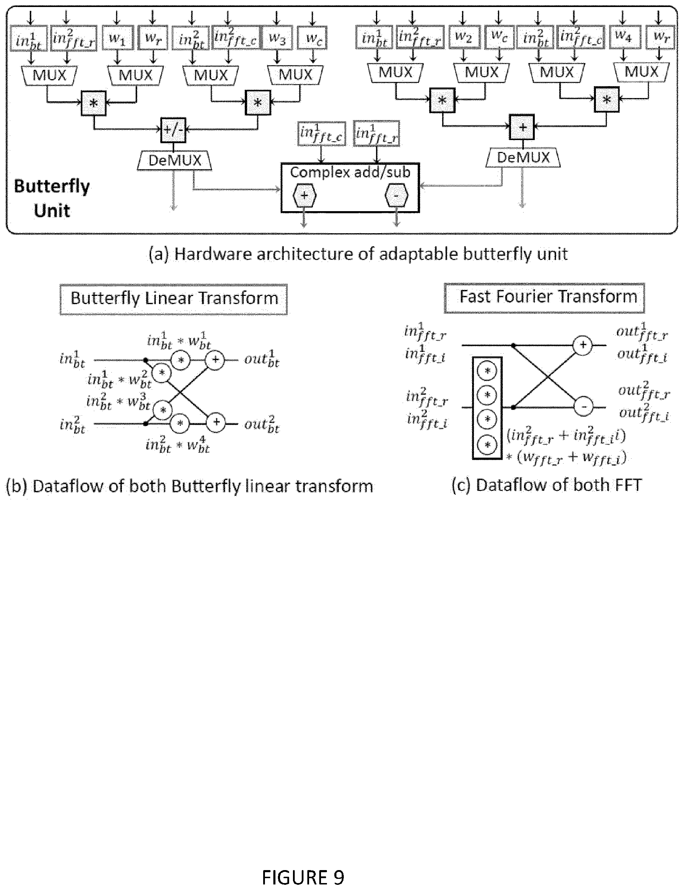

*Adaptable Butterfly Engine.* Figure 9a shows the hardware architecture of BE. Each BE is mainly composed of an adaptable memory system and $N_{BU}$ number of adaptable Butterfly Units (BUs). To improve the hardware efficiency and enable the use of a single unified engine, the BE module is designed with a focus on adaptability. As such, it can be configured via programmable multiplexers and de-multiplexers at runtime to either execute an FFT or a butterfly linear transformation.

*Adaptable Butterfly Unit.* Figure 9a depicts the architecture of the proposed adaptable BU. Each adaptable BU consists of four real-number multipliers and two real-number adders/subtractors, followed by two complex-number adders/subtractors. The inputs and twiddle factors of both FFT and butterfly linear transformation are connected to the multipliers, with eight multiplexers used to select the correct inputs for each operation. Two de-multiplexers are placed after the real-number adders/subtractors to control the output flow.

When performing the butterfly linear transformation (see Figure 9b), the twiddle factors are non-symmetric real numbers. Hence, the output of each twiddle multiply can be computed as:

$$out_{bt}^1 = in_{bt}^1 \cdot w_{bt}^1 + in_{bt}^2 \cdot w_{bt}^3, out_{be}^2 = in_{bt}^1 \cdot w_{bt}^2 + in_{bt}^2 \cdot w_{bt}^4$$

where $in_{bt}^{1\sim4}$ and $w_{bt}^{1\sim4}$ represent the inputs and twiddle factors, respectively. To perform the butterfly linear transformation, four multipliers in each BE are configured to execute the four real-number multiplications in the equation above. The values $in_{bt}^{1\sim4}$ and $w_{bt}^{1\sim4}$ are selected via multiplexers as the operands of multipliers. At the same time, the results $out_{bt}^{1\sim1}$ generated from the real-number adders/subtractors are outputted directly from the de-multiplexers.

For FFT (Figure 9c) since the twiddle factors of FFT are complex numbers and symmetric, it only requires one complex-number multiplication per twiddle multiplication. Thus, by selecting the complex inputs $in_{fft\_r}^{1\sim2} + in_{fft\_i}^{1\sim2}i$ and twiddle factor $w_{fft\_r} + w_{fft\_i}i$, the four real-number multipliers in each *BE* are used to perform the required complex-number multiplication. The de-multiplexers are then configured to output the results to the complex-number adders/subtractors to get the final results $out_{fft\_r}^{1\sim2} + out_{fft\_i}^{1\sim2}i$. The control signals for the multiplexers and de-multiplexers are set by users before running each layer. As such, the proposed adaptable *BE* can be used to accelerate both FFTs and butterfly linear transformations by reusing the multipliers, adders and subtractors to improve the hardware efficiency. The control signals for the multiplexers and de-multiplexers are set by users before running each layer. As such, the proposed adaptable BE can be used to accelerate both FFTs and butterfly linear transformations by reusing the multipliers, adders and subtractors to improve the hardware efficiency.

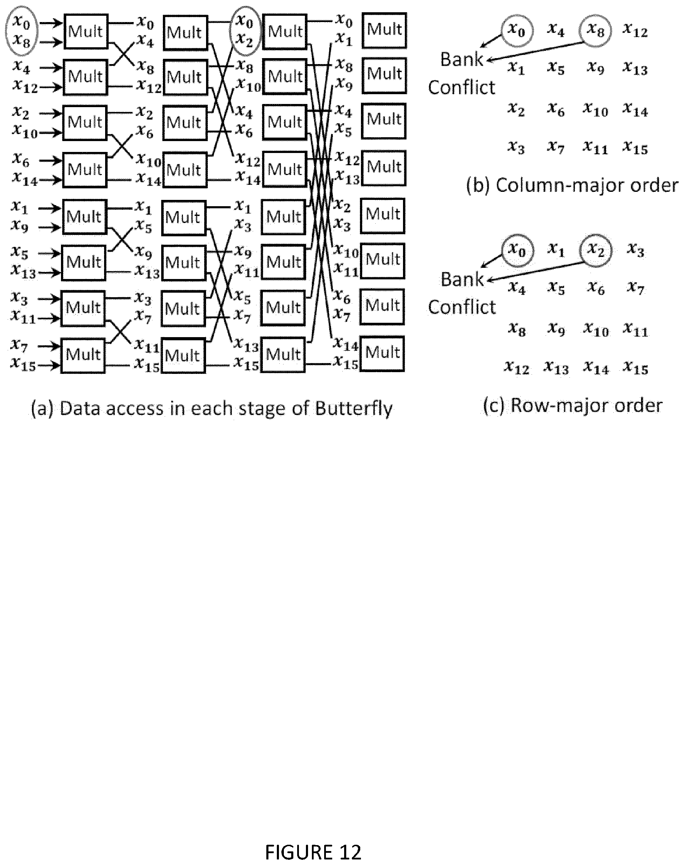

*Butterfly Memory System.* Figures 12a-c show bank conflicts in column-major and row-major orders. The present applicant's adaptable memory system comprises an input manager, a serial-to-parallel (S2P) module, a parallel-to-serial (P2S) module and input buffers. To reduce the memory consumption, the same input buffers are used for both FFT and butterfly linear transformation. Furthermore, pingpong buffering is used to reduce the data transfer time. However, as the data width of FFT is twice that of the butterfly linear transformation, different address mapping and fine-grained pipelining strategies are adopted to improve the hardware efficiency and performance.

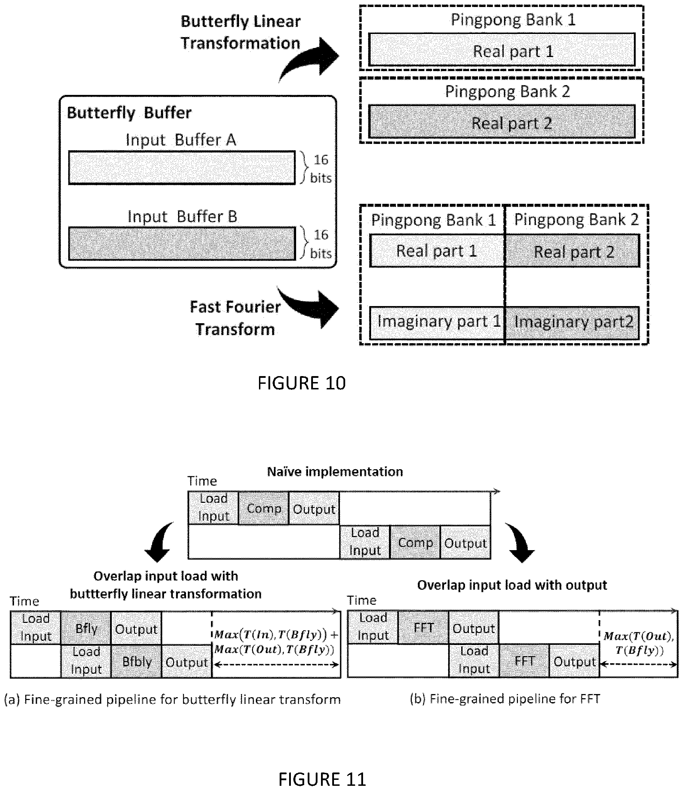

Figure 10 shows the present address mapping strategies for FFT and the butterfly linear transformation. Assuming the bitwidth of real numbers is 16 bits, each input buffer is 16-bit wide. While processing butterfly linear transformations, input buffer A and B are used as two independent pingpong banks with separate read and write ports. In this manner, when input buffer A is used for computation, buffer B can start the input data transfer of the next batch, leading to the fined-grained pipelining strategy shown in Figure 11. While processing FFT, since the data include both real and imaginary parts which require 32-bit read and write ports, the lower parts of input buffer A and B are concatenated as the first pingpong bank for the storage of complex numbers. To improve the hardware efficiency, the higher parts of both buffers are reused as the second pingpong bank. As the computation requires both read and write access, another fine-grained pipeline strategy is adopted to overlap the output data transfer only with the input data load of next batch as shown in Figure 11b. With the adaptable pipeline strategies for FFT and butterfly linear transformation, the hardware efficiency and performance is maximised.

*Data Storage for Butterfly Pattern.* As shown in Figure 12(a) the butterfly pattern requires different data access in different stages. The conventional column-major or row-major order will cause bank conflicts while reading the data. For instance, accessing index pair $x_0$ and $x_8$ of the first stage causes the read conflict in the column-major order as shown Figure 12b. The row-major order also suffers from the same issue while reading $x_0$ and $x_2$ in the third stage.

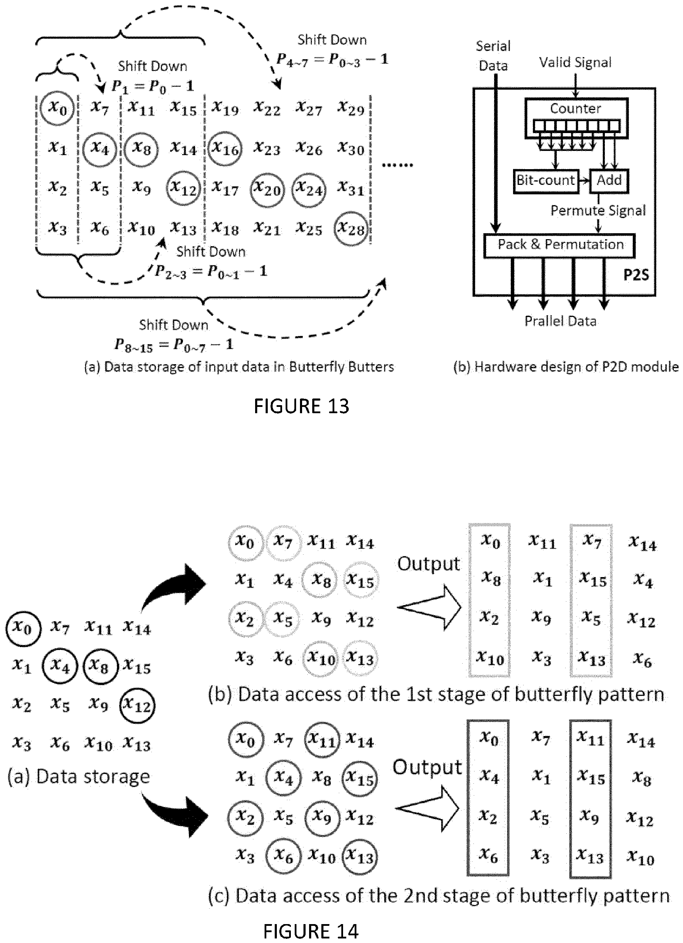

To avoid the bank conflict, a custom data layout strategy is introduced (Figure 13a) and implemented using the S2P module shown in Figure 13b. Each column $i$ is permuted using a starting position $P_i$ which indicates how many rows the first element in the current column should be shifted down. The starting position is defined using the following formula:

$$P_0 = 0, \quad P_{2^n \sim 2^{n-1}} = P_{2^{n-1} \sim 0} - 1 \text{ with } 1 \leq n \leq N$$

For each $2^n$ - $2^{n-1}$ columns, the starting positions $P_{2^n \sim 2^n - 1}$ is obtained by shifting $P_{2^{n-1} \sim 0}$ one position down, as shown in Figure 13a. The starting positions are generated using a counter, and a bit-count and addition operations (Figure 13b) After packing the serial data together, S2P permutes the packed data based on the starting positions to generate the final outputs.

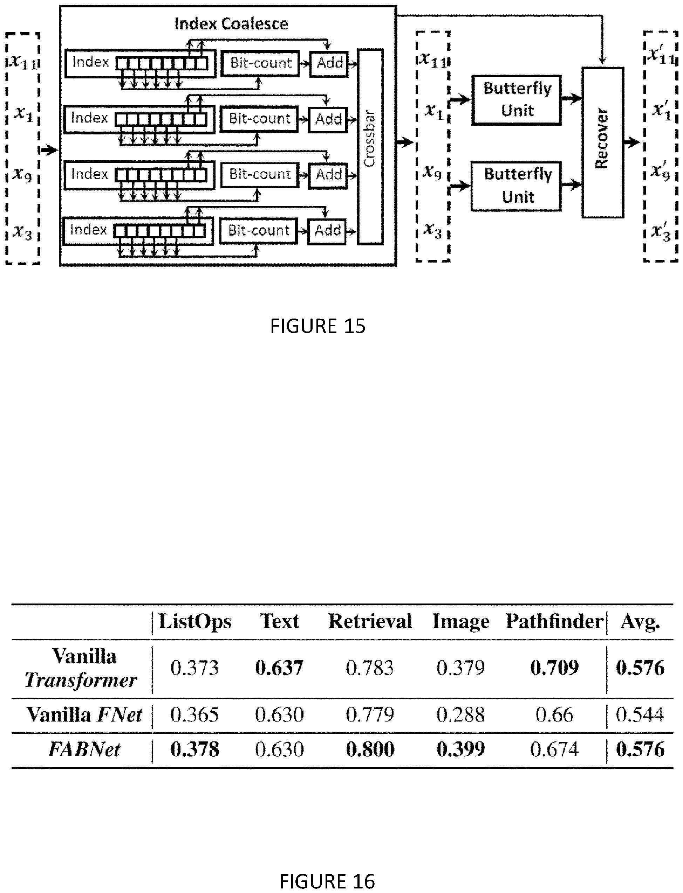

Figure 14 presents an example with 16 inputs, where the data required by the first and second stage of the butterfly pattern are read from the buffers without bank conflicts. However, as the butterfly units receive data in pairs, an extra pairing is required after the SP2 module. An example is the second output column $\langle x_{11}, x_1, x_9, x_3 \rangle$ of the first stage in Figure 14b. To pair indices, an index coalescing module is designed before the butterfly units (Figure 15). Based on the index of each input, a bit-count and addition operation are used to calculate the corresponding shift position. Then, a crossbar coalesces the index pairs based on the indices and shift positions. To ensure the outputs generated from the butterfly units preserve the original order, a recover module is used before the data is written back.

While executing the ABfly block, both BP and AP are used to perform butterfly linear transformation and attention matrix multiplication, respectively. To further improve the performance when executing the ABfly block, the present applicant employs a fine-grained pipeline between BP and AP.

Figures 11a and 11b show adaptable fine-grained pipeline strategies, and illustrate the dataflow of BP and AP. In the naive implementation, the key (K), value (V) and query (Q) matrices are generated sequentially from BP. After all Q, K and V are computed, AP starts the computation of $Q \times K^T$. To optimize this process, the present applicant reorders the execution sequence of linear layers such that BP computes K and V at the beginning, see Figure 11b. As $Q \times K^T$ can be decomposed as multiple vector matrix multiplications that multiply different rows of Q with the entire matrix $K^T$, computation of $Q \times K^T$ can be started once the first few rows of Q are available. As such, the $Q \times K^T$ in AP can be pipelined with the computation of Q in BP. At the same time, since S is generated from the QK unit row by row, $Q \times K^T$ can be further pipelined with $S \times V$ as the computation of $S \times V$ can start once the first few rows of S are generated from the QK unit. Assuming there are M and L rows in Q and K matrices and it takes $\dfrac{T(QK)}{M}$ and $\dfrac{T(SV)}{L}$ to compute

one row in the SV and QK units respectively, the total latency reduction is $\frac{M-1}{M}T(QK) + \frac{L-1}{L}T(SV)$ .

*Algorithm and Hardware Co-Design* The overall design space of the present applicant's end-to-end system is formed by FABNet's hyper-parameters and the butterfly accelerator's hardware parameters. Specifically, the joint design space consists of: 1) the algorithm parameters, i.e. the hidden size ($D_{hid}$), the expand ratio of FFN ($R_{ffn}$), the total number of blocks ($N_{total}$) and the number of ABfly blocks ($N_{ABfly}$) in FABNet, and 2) the hardware parameters, i.e. the parallelism of BU ($P_{bu}$) and BE ($P_{be}$) in BP, and the parallelism of the QK ($P_{qk}$) and SV ($P_{SV}$) units in AP.

To assess the trade-off provided by each design point, it is necessary to evaluate its algorithmic performance (e.g. an accuracy metric), its latency and its resource consumption. During search, the algorithmic performance is obtained by training and evaluating FABNet, while the latency is estimated by utilizing a custom cycle-accurate simulator built for the present applicant's butterfly accelerator. To verify whether the design can be accommodated by the target FPGA device, the present applicant developed an analytical model to estimate the consumption of DSP blocks and on-chip memory (BRAMs), and used a set of place-and-route measurements to fit linear regression models for the consumption of Look-Up Tables (LUTs) and registers.

*Evaluation*

*Experimental Setup*

*Benchmarks.* To evaluate the present algorithm and hardware performance for the workloads with long sequences, six tasks from Long-Range-Arena are chosen including hierarchical data classification (ListOPs), byte-level text classification (Text), byte-level document retrieval (Retrieval), image classification for sequences of pixels (Image), classification of long-range spatial dependency (Pathfinder). The input sequences of these datasets range from 1024 to 4000.

*Software Implementation.* The vanilla Transformer, FNet, and the present FABNet models are implemented using Pytorch 1.10 framework. The pretrained models are obtained from Huggingface 4.16. The batch size is 256 for both Image and Pathfinder tasks, and 32 for the rest of datasets during training. The learning rate is 0.0001, except for Image task with 0.01 and Pathfinder task with 0.0005. Multiple Nvidia A100 and V100 GPUs are used for training. To use FFT cores on Nvidia GPUs, the PyTorch API "rfft2" is used to implement the FFT operation required in both FNet and FABNet. The high-performance CUDA implementation of butterfly linear transformation is adopted to accelerate both GPU training and inference. Two models are defined with different default settings: FABNet-Base ($D_{hid}$ = 768, $R_{ffn}$ = 4, $N_{total}$ = 12, $N_{ABfly}$ = 0) and FABNet-Large ($D_{hid}$ = 1024, $R_{ffn}$ = 4, $N_{total}$ = 24, $N_{ABfly}$ = 0).

*Hardware Implementation.* The present applicant implements their hardware accelerators using Verilog. To evaluate performance in different scenarios, two Xilinx FPGA boards are used in the experiments: VCU128 for cloud/server scenarios and Zynq 7045 for edge/mobile settings. Xilinx Vivado 2019.1 is used for synthesis and implementation. The clock frequency of the present designs vary by different FPGA boards and resource consumptions. All the FPGA designs are clocked at 200 MHz, which is below the maximum. The power consumption is obtained using the Xilinx Power Estimator (XPE) tool provided by Vivado. A cycle-accurate performance model is developed to evaluate the speed performance, which is cross-validated with RTL simulation results. The present applicant's hardware design uses 16-bit floating point.

*Effectiveness of Co-Design.* The effectiveness of the present applicant's co-design approach in finding the optimal algorithm and hardware designs is evaluated. For demonstration, LRA-Text is used as the target dataset and VCU128 FPGA as the target device. $D_{hid}$, $R_{ffn}$, $N_{ABfly}$ and $N_{total}$ are selected from {64, 128, 256, 512, 1024}, {1, 2, 4}, {0, 1} and {1, 2} respectively. The hardware parallelisms ($P_{be}$, $P_{bu}$, $P_{qk}$ and $N_{SV}$) are chosen from {4, 8, 16, 32, 64, 128}. Among the design points that satisfy the accuracy constraint, the point with the lowest latency in the Pareto front is chosen as point of comparison. The selected point is up to 10% more accurate than the points in the same latency range and up to 130x faster than points in the same accuracy range, underlining the advantages of the present applicant's co-design approach. To get the configurations for the rest of the datasets in LRA, the overall accuracy loss is constrained to be less than 0.5% compared with the vanilla Transformer. The final models and designs are chosen as the configurations with the highest hardware performance without violating the accuracy constraints. Unless mentioned otherwise, the rest of the sections report the algorithm and hardware performance using the configurations optimized by the present applicant's hardware configurations.

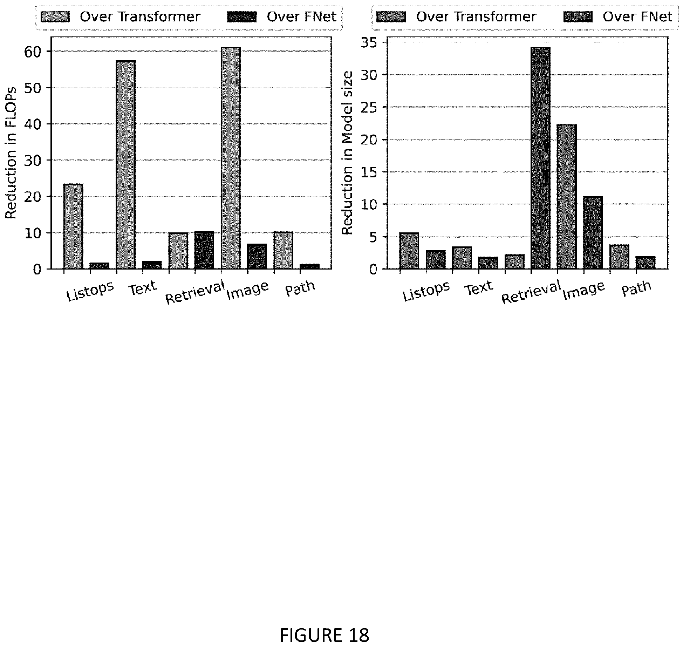

*Algorithm Performance.* Figure 16 compares the accuracy of the vanilla Transformer FNet and the present applicant's FABNet. FABNet achieves higher accuracy than both Transformer and FNet on three out of five tasks, including ListOPs, Retrieval and Image. On average, FAB-Net has the same accuracy performance as Transformer. To investigate the efficiency of FABNet, Figure 18 shows the compression rate of the present applicant's optimized FABNet over the vanilla Transformer and FNet in terms of floating-point operations (FLOPS) and model size (number of parameters). Compared with the vanilla Transformer, FABNet achieves around 10 ~ 60x reduction in FLOPs and 2 ~ 22x reduction in model size, depending on the target task. Furthermore, compared with FNet, FABNet reduces FLOPs by 2 ~ 10x and model size by 2 ~ 32x.

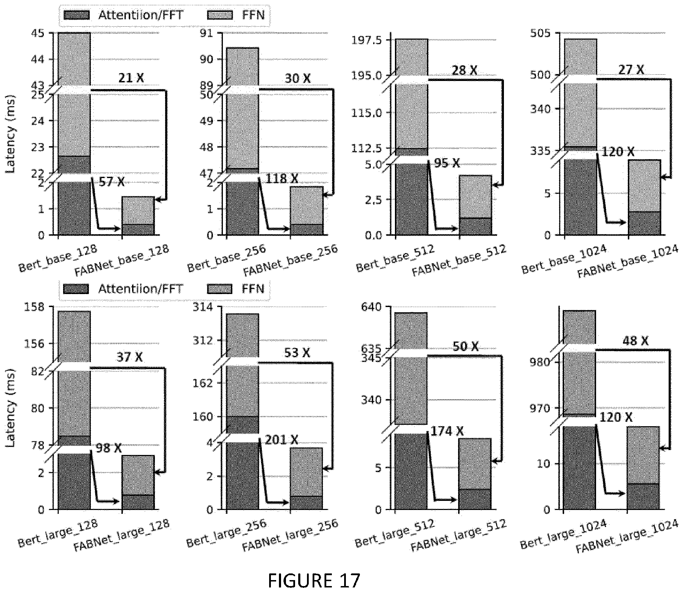

*Comparison with Baseline Design.* To demonstrate the advantage of co-designing both algorithm (FABNet) and hardware (butterfly accelerator), a baseline design is implemented to accelerate the vanilla BERT. The baseline hardware was designed with multiple multiplier-accumulator (MAC) units to accelerate the linear transform and different matrix multiplications between query, key and value vectors. Each MAC is composed of a bunch of multipliers followed by an adder tree. The fine-grained intra- and inter-layer pipeline techniques were used to optimize the hardware performance. The parallelism of each MAC unit is allocated according to its workload in order to achieve load-balanced execution between different pipeline stages. For a fair comparison, both baseline and butterfly accelerators are implemented on a VCU128 FPGA using 2048 DSPs. The high bandwidth memory (HBM) was used as the external memory. Both designs were clocked at 200 MHz. Both base and large versions of each model are evaluated using four different input sequences (128, 256, 512 and 1024). The base version contains 12 layers and the large version have 24 layers. A speedup breakdown is shown in Figure 17. Comparing to the baseline design with BERT-Base, the butterfly accelerator achieves 21 ~ 30 times speedup on the FFN. The speedup increases to 37 ~ 53 times on the large version. At the same time, the present butterfly accelerator is 57 ~ 120 and 98 ~ 201 times faster than the baseline design on the attention part of Bert-Base and Bert-Large respectively. The butterfly accelerator shows a higher speedup on the attention than FFN, which is due to the higher compression rate brought by FFT.

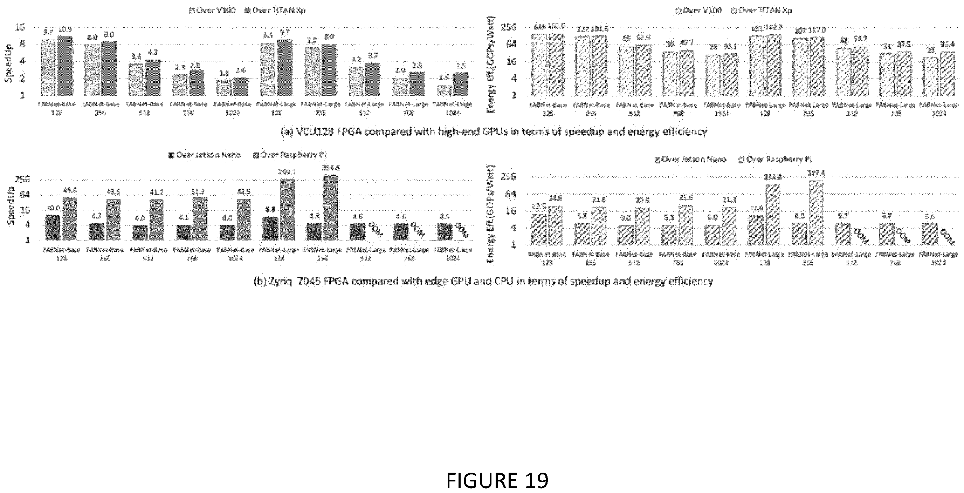

*Comparison with GPU and CPU.* The comparison against GPU and CPU is performed in both server and edge scenarios. In edge setting, the butterfly accelerator is implemented on a Xilinx Zynq 7045 FPGA. DDR4 is used as external memory and 512 DSPs are used for computation. Nvidia Jetson Nano GPU and Raspberry Pi4 are used as GPU and CPU platforms respectively. In server scenario, a Xilinx VCU128 FPGA is used to implement the butterfly accelerator. HBM is used as external memory and the design consumes 2048DSPs. Nvidia V100 and TITAN Xp GPUs are used for comparison. The highly-optimized CUDA code is used for GPU implementations. FPGA designs are clocked at 200 MHz. Both FABNet-Base and FABNet-Large are evaluated using 128, 256, 512 and 1024 input sequences. Figure 19 shows the results in term of speedup and energy efficiency. Energy efficiency is represented using Giga operations per second per Watt (GOPS/Watt). In the edge scenario, the present design on Zynq 7045 FPGA achieves 4.5 ~ 10$\times$ speedup over Jetson Nano GPU and 41.2 ~ 394.8$\times$ speedup over Raspberry Pi4. At the same time, the present design also shows 5.0 ~ 12.5$\times$ and 21.3 ~ 197.4$\times$ higher energy efficiency than Jetson Nano and Raspberry Pi4 respectively. In the server scenario, the present design on VCU128 is up to 10.9 and 9.7$\times$ faster and up to 160.6 and 149$\times$ higher energy efficiency than V100 and TITAN Xp GPUs respectively. In summary, the end-to-end speedup and energy efficiency gains on both edge and server scenarios under different input sequences highlight the scalability of the present butterfly accelerator.

In the edge scenario, the present design on Zynq 7045 FPGA achieves 4.5 - 10 times speedup than Jetson Nano GPU and 41.2 - 394.8 times speedup than Raspberry Pi4. On FABNet-Large with long input sequences greater than 768, Raspberry Pi4 suffers out-of-memory (OOM) issue. At the same time, the present design also shows 5.0 - 12.5 and 21.3 - 197.4 higher energy efficiency than Jetson Nano and Raspberry Pi4 respectively. In the server setting, the present design on VCU128 is up to 10.9 and 756 times faster than RTX 2080 Ti GPU and Golden 6145 CPU. Up to 168.0 and 7624.9 times higher energy efficiency is achieved than RTX 2080 Ti GPU and Golden 6145 CPU respectively. The end-to-end speedup on both edge and server scenarios under different input sequences also demonstrates the scalability of the present butterfly accelerator.

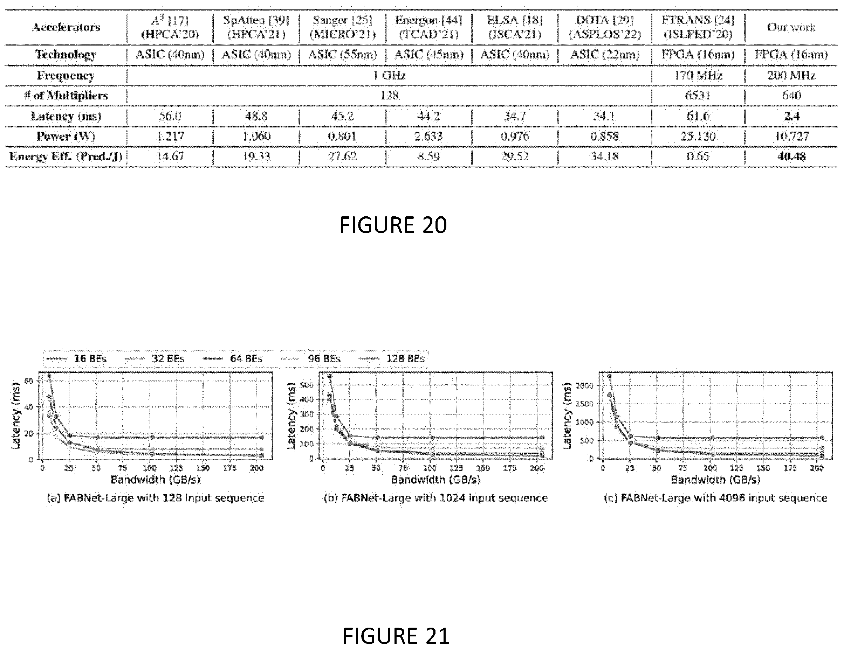

*Comparison with SOTA Accelerators.* Figure 20 compares the present butterfly accelerator with other state-of-the-art (SOTA) accelerators in terms of speed performance and power consumption. Instead of comparing the effective throughput, the end-to-end latency is used to represent the real execution speed. The energy efficiency is represented by the number of predictions per Joule (Pred./J). Among these accelerators, only SpAtten and DOTA report the end-to-end performance. For the rest of accelerators with only attention support, their performance is estimated by reusing the available multipliers in the design to accelerate FFN. For a fair comparison, it is assumed that all the ASIC designs use 128 multipliers for computation, and the clock frequency is 1GHz. For the design with more than 128 multiplier, the throughput is linearly scaled down its to get the end-to-end performance. For instance, DOTA achieves 11.41 times speedup than Nvidia V100 using 12,000 multipliers with 12 TOPS throughput. The throughput is scaled down its by 12,000/128 = 93.75, which leads to 0.123 times speedup. The power consumption is obtainedusing the same linear scaling approach. For example, Sanger reports its power consumption of a design with 1024 multipliers. The power consumption of their systolic array (2243 mW) is divided by 1024/128 = 8, which leads to 280.375 mW. Together with the power of other modules such as pre-processing and memory, their total power consumption is 0.801 W. To match the computational capacity of ASIC designs, 640 DSPs in the VCU128 FPGA are used. As the present FPGA-based design is clocked at 200MHz, this ensures the same 620 $\times$ 200M = 128GOPS theoretical peak performance as ASIC designs 128 $\times$ 1G = 128GOPS).

As shown in Figure 20 the present butterfly accelerator achieves 25.6 times speed up than previous FPGA-based design while using nearly 10 times less DSPs. At the same time, 62.3 times higher energy efficiency is achieved than FTRANS. Comparing with other ASIC designs, the present techniques can achieve 14.2 - 23.2 times speedup under the same computational capacity. Although the present FPGA-based butterfly design consumes more power than all other ASIC designs, it can achieve 1.2 ~ 4.7 times higher energy efficiency than other SOTA ASIC accelerators. Higher speedup and energy efficiency is expected when the present design is implemented on ASIC. There are two reasons for the better performance than ASIC designs: (1) the use of FFT and butterfly factorization significantly reduce the computational complexity in algorithm level; and (2) the adaptable butterfly design that adopts one unified hardware engine to accelerate both FFT and butterfly linear transformation, which significantly improve the hardware efficiency.

*Off-Chip Memory Bandwidth Analysis.* In order to investigate the sensitivity of the present design to off-chip memory bandwidth, the bandwidth is varied from 6, 12, 25, 50, 100 and 200 GB/s, and evaluate its latency based on the present custom cycle-accurate simulator. For this experiment, five different designs with 16, 32, 64 and 128 BEs are used when executing FABNet-Large with 24 layers. To understand the bandwidth requirements under both short and long input lengths, each design is evaluated using three input sequences (128, 1024 and 4096). The results are shown in Figure 21. For a small-scale design of 16 BEs, a bandwidth of 50 GB/s is enough for the design to reach its peak performance under different input sequences. For the largest design with 128 BEs, the achieved performance saturates once the bandwidth reaches 100 GB/s.

*Power and Resource Analysis.* Table 6 shows the breakdown of the power consumption based on the report generated from the Vivado XPE tool. Two designs are implemented with 128 BEs (BE-128) and 40 Bes (BE-40) on VCU128 FPGA. In both designs, the dynamic power takes more than 70% of the total power consumption. The memory resources, including both BRAM and HBM, consume more than 40% of the dynamic power. Furthermore, when the number of BEs scales from 40 to 128, the power of clocking, logic & signal and DSPs increases from 0.724 W, 0.844 W and 0.129 W to 2.143 W, 2.693 W and 0.412 W, respectively. Table7presents the resource consumption of both BE40 and BE-128 on the same VCU128 FPGA. Due to the use of FFT and butterfly matrices, the present FABNet becomes less memory-intensive than the vanilla attention-based NNs. Since the theoretical memory bandwidth of a single HBM (450 GB/s) can already satisfy the requirement of the present accelerator, one HBM is used in both designs to reduce the resource and power consumption. When the number of BEs decreases from 128 to 40, the BRAM utilization is reduced from 1042 to 338. The reduction can be also observed on the LUT and Register resources.

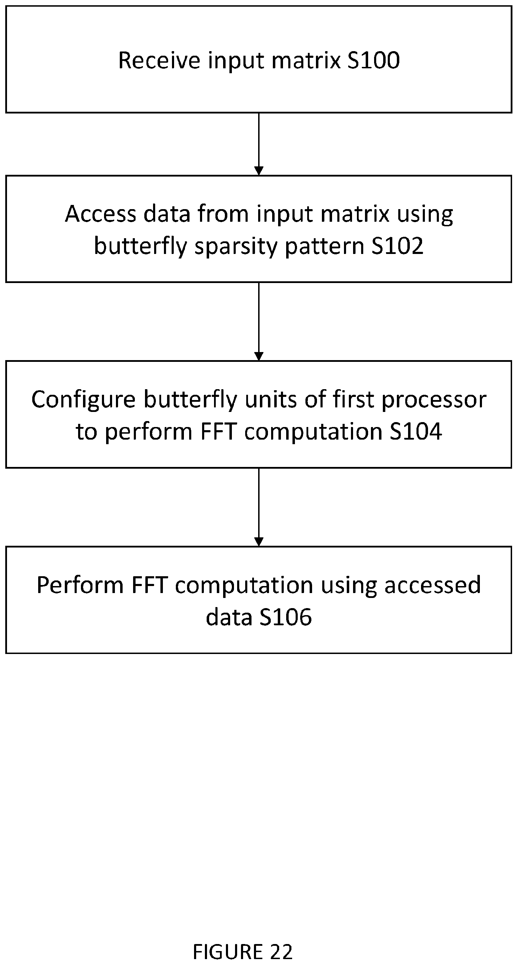

Figure 22 shows a flowchart describing a method for accelerating machine learning, ML, model computations using the processing unit described herein. The method comprises: receiving an input matrix for processing by the ML model (step S100); and using the first processor of the processing unit to: access data from the input matrix based on a butterfly sparsity pattern (step S102); configure the plurality of butterfly units of the first processor to perform a Fast Fourier Transform computation (step S104); and perform a Fast Fourier Transform computation using the accessed data (step S106). The same method may be used to accelerate computations of any layer involving matrices having a butterfly sparsity pattern. That is, instead of the FFT computation, any other computation (e.g. linear transformation) of any layer of the ML model may be performed using the first processor as long as the layer uses butterfly sparsity.

The method may further comprise: using the third processor of the processing unit to: perform an attention mechanism computation using the input matrix and an output of the first processor, where the attention mechanism computation does not involve a sparse matrix having a butterfly sparsity pattern. That is, when the ML model comprises even a single attention layer that is vanilla or conventional, i.e. which does not use butterfly sparsity, the third processor is used to execute that attention layer when the model is executed.

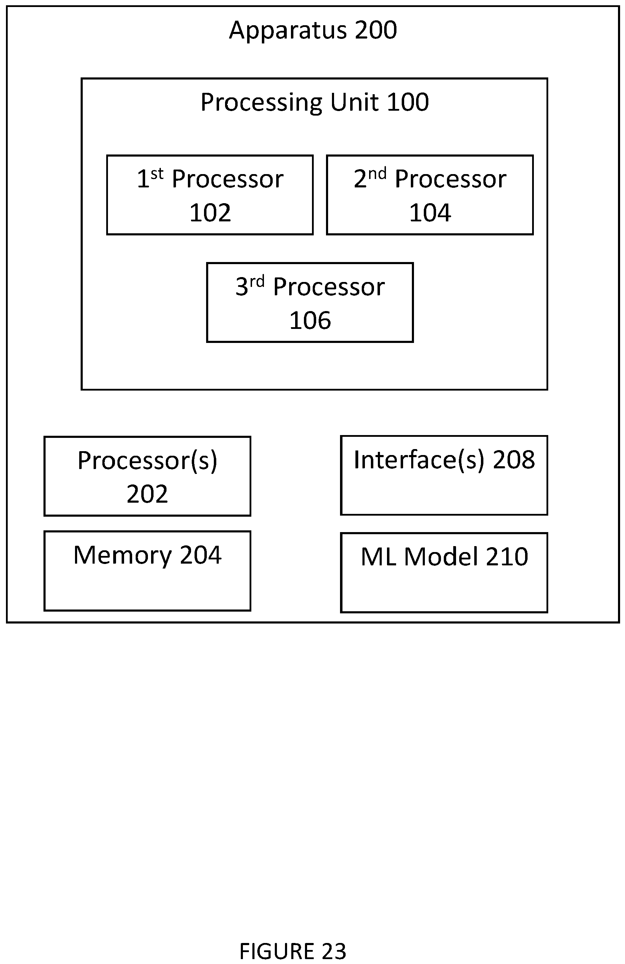

Figure 23 is a block diagram of an apparatus 200 incorporating the accelerator of the present techniques. The apparatus 200 may be any apparatus which will implement a ML model and benefit from an accelerator to achieve high-speed computing. For example, the apparatus 200 may be a constrained-resource device, but which has the minimum hardware capabilities to use a trained neural network/ML model. The apparatus may be: a smartphone, tablet, laptop, computer or computing device, virtual assistant device, a vehicle, a drone, an autonomous vehicle, a robot or robotic device, a robotic assistant, image capture system or device, an augmented reality system or device, a virtual reality system or device, a gaming system, an Internet of Things device, a smart consumer device, a smartwatch, a fitness tracker, and a wearable device. It will be understood that this is a non-exhaustive and non-limiting list of example apparatus.

The apparatus 200 comprises at least one processor 202. The at least one processor 202 may comprise one or more of: a microprocessor, a microcontroller, and an integrated circuit. The at least one processor 202 may be, for example, a CPU or GPU.

The apparatus 200 comprises a processing unit 100 of the type described herein, including with reference to Figure 8. A description of processing unit 100 is therefore not provided again here. The processing unit 100 accelerates machine learning, ML, model computations. Specifically, the processing unit 100 partners with the general purpose processor 202 of the apparatus 200, to boost the speed at which data is processed, thereby improving the performance of processor 202.

The apparatus 200 may comprise a memory 204. The memory 204 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example.

The apparatus 200 comprises a ML model 210. The processing unit 100 accelerates computations of the ML model which involve a sparse matrix, the sparse matrix having a butterfly sparsity pattern. As explained above, the first processor 102 of the processing unit accelerates computations of any layer of the ML model 210, as long as the computations involve matrices having a butterfly sparsity pattern. That is, when the ML model 210 begins processing some data using the processor 202, and the processing needs to be accelerated (because, for example, a latency requirement), the processor 202 may offload the task to the processing unit 100.

The apparatus 200 comprises at least one interface 208 for receiving data/data items for processing by the ML model 210. The interface 208 may be a camera for capturing images or a microphone for capturing audio. It will be understood these are non-limiting example interfaces.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

**Claims**

1. A processing unit for accelerating machine learning, ML, model computations, the processing unit comprising:
   a first processor for accelerating computations involving a sparse matrix, the sparse matrix having a butterfly sparsity pattern.

2. The processing unit as claimed in claim 1 wherein the first processor comprises a plurality of butterfly engines used to accelerate the computations involving a sparse matrix, wherein each butterfly engine comprises a memory system and a plurality of butterfly units, wherein each butterfly unit is configurable to perform a specific computation.

3. The processing unit as claimed in claim 2 wherein each butterfly unit is configurable to perform any of: a Fast Fourier Transform, and a linear transformation on a sparse matrix having a butterfly sparsity pattern.

4. The processing unit as claimed in claim 2 or 3 wherein each butterfly unit comprises a plurality of multiplexers arranged to select inputs required to perform the specific computation.

5. The processing unit as claimed in claim 2, 3 or 4, wherein each butterfly unit comprises:

   four real-number multipliers, arranged to multiply inputs required to perform the specific computation;
   two real-number adders or subtractors, arranged to operate on outputs of the real-number multipliers; and
   two complex-number adders or subtractors, arranged to operate on outputs of the real-number adders or subtractors.

6. The processing unit as claimed in claim 5 wherein each butterfly unit comprises:

   eight multiplexers, arranged to receive the inputs for the specific computation, and to select the inputs required to perform the specific computation; and
   two de-multiplexers, arranged between the two real-number adders or subtractors and the two complex-number adders or subtractors, to provide outputs of the butterfly unit.

7. The processing unit as claimed in any of claims 2 to 6, wherein the memory system comprises a serial-to-parallel module arranged to access data for the specific computation based on the butterfly sparsity pattern.

8. The processing unit as claimed in any preceding claim further comprising:
   a second processor for receiving outputs from the first processor and for performing post-processing using the received outputs.

9. The processing unit as claimed in any preceding claim, wherein when the ML model comprises at least one attention layer requiring computations that do not involve a sparse matrix having a butterfly sparsity pattern, the processing unit further comprises a third processor for performing operations required by the at least one attention layer.

10. The processing unit as claimed in claim 9, wherein the third processor comprises a plurality of attention engines, and wherein each attention engine comprises:

a query key, QK, unit for implementing matrix multiplications between query and key matrices; and
a score value, SV, unit for receiving outputs from the QK unit and multiplying the outputs with value vectors to output results of an attention layer of the ML model.

11. The processing unit as claimed in any of claims 2 to 10, wherein the plurality of butterfly engines are configurable in real-time to perform the specific computation.

12. The processing unit as claimed in any preceding claim wherein the processing unit receives an input for processing by the ML model, and uses the first processor to perform a Fast Fourier Transform computation using the received input.

13. A computer-implemented method for accelerating machine learning, ML, model computations using the processing unit recited in any of claims 1 to 12, the method comprising:

receiving an input matrix for processing by the ML model; and
using the first processor of the processing unit to:

access data from the input matrix based on a butterfly sparsity pattern;
configure the plurality of butterfly units of the first processor to perform a Fast Fourier Transform computation; and
perform a Fast Fourier Transform computation using the accessed data.

14. The method as claimed in claim 13 further comprising:
using the third processor of the processing unit to:
perform an attention mechanism computation using the input matrix and an output of the first processor, where the attention mechanism computation does not involve a sparse matrix having a butterfly sparsity pattern.

15. A computer-readable storage medium comprising instructions which, when executed by a processor, causes the processor to carry out the method of claims 13 to 14.

FIGURE 1

---

**Algorithm 1** Linear transformation and attention

---

1: **for** $(i = 0; i < N_l; i + +)$
2:   **for** $(j = 0; j < D_{\text{head}}; j + +)$
3:     **for** $(n = 0; n < D_{\text{hid}}; n + +)$
4:       $Q[i][j] \mathrel{+}= I[i][n] \times W_Q[n][j]$
5:       $K[i][j] \mathrel{+}= I[i][n] \times W_K[n][j]$
6:       $V[i][j] \mathrel{+}= I[i][n] \times W_V[n][j]$
7: **for** $(m = 0; m < N_{\text{head}}; m + +)$
8:   **for** $(i = 0; i < N_l; i + +)$
9:     **for** $(j = 0; j < N_l; j + +)$
10:       **for** $(k = m \times \frac{D_{\text{head}}}{N_{\text{head}}}; k < (m + 1) \times \frac{D_{\text{head}}}{N_{\text{head}}}; k + +)$
11:         $S[i][j] = Q[i][k] \times K[j][k]$
12:   $S = Softmax(S)$
13:   **for** $(i = 0; i < N_l; i + +)$
14:     **for** $(j = m \times \frac{D_{\text{head}}}{N_{\text{head}}}; j < (m + 1) \times \frac{D_{\text{head}}}{N_{\text{head}}}; j + +)$
15:       **for** $(k = 0; k < N_l; k + +)$
16:         $P[i][j] = S[i][k] \times V[k][j]$
17: **for** $(i = 0; i < N_l; i + +)$
18:   **for** $(j = 0; j < D_{\text{head}}; j + +)$
19:     **for** $(n = 0; n < D_{\text{hid}}; n + +)$
20:       $R[i][j] \mathrel{+}= P[i][n] \times W_P[n][j]$

---

FIGURE 2

| Parameter | Description |
|---|---|
| $N_{\text{encoder}}$ | Number of encoders |
| $N_{\text{decoder}}$ | Number of decoders |
| $N_l$ | Length of input sequence |
| $N_{\text{head}}$ | Number of heads |
| $D_{\text{hid}}$ | Hidden size |
| $D_{\text{head}}$ | Size of all heads concatenated |
| $P_{\text{row}}$ | Parallelism in row dimension |
| $P_{\text{vector}}$ | Parallelism in vector dimension |
| $P_{\text{column}}$ | Parallelism in column dimension |

FIGURE 3

FIGURE 4

| Sparsity | Low Rank | Sliding Window | Butterfly | Random | Block-wise |
|---|---|---|---|---|---|
| Patten | | | | | |
| Data Access | Sequential row & column read | Regular stride read | Regular stride read | Random read | Regular stride read |
| HW Eff. | No | Yes | Yes | No | Yes |
| Info. | Global | Local | Global & Local | Global&Local | Local |

FIGURE 5

FIGURE 6

| Model | Sparsity pattern | Att. | FFN | Co-Design |
|---|---|---|---|---|
| Performer Linformer | Low-Rank (Extra kernels) | ✔ | ✘ | ✘ |
| Reformer | Block-wise (Extra kernels) | ✔ | ✘ | ✘ |
| Sparse Sinkhorn | Block-wise + Random | ✔ | ✘ | ✘ |
| Longformer | Sliding-Window + Low-Rank | ✔ | ✘ | ✘ |
| BigBird | Random + Sliding-Window + Low-Rank | ✔ | ✘ | ✘ |
| FNet | Butterfly | ✔ | ✘ | ✘ |
| Sparse Trans. | Low-Rank + Butterfly + Sliding-Window | ✔ | ✘ | ✘ |
| Kaleidoscope | Butterfly | ✘ | ✔ | ✘ |
| Pixelfly | Butterfly + Block-Wise + Low-Rank | ✔ | ✘ | ✘ |
| **Our work** | Butterfly | ✔ | ✔ | ✔ |

FIGURE 7

FIGURE 8

(a) Hardware architecture of adaptable butterfly unit

Butterfly Linear Transform

Fast Fourier Transform

(b) Dataflow of both Butterfly linear transform

(c) Dataflow of both FFT

FIGURE 9

FIGURE 10

(a) Fine-grained pipeline for butterfly linear transform    (b) Fine-grained pipeline for FFT

FIGURE 11

(a) Data access in each stage of Butterfly

(b) Column-major order

(c) Row-major order

FIGURE 12

Shift Down
$P_{4\sim7} = P_{0\sim3} - 1$

Shift Down
$P_1 = P_0 - 1$

Shift Down
$P_{2\sim3} = P_{0\sim1} - 1$

Shift Down
$P_{8\sim15} = P_{0\sim7} - 1$

(a) Data storage of input data in Butterfly Butters

Serial Data    Valid Signal

Counter

Bit-count → Add

Permute Signal

Pack & Permutation

P2S

Prallel Data

(b) Hardware design of P2D module

FIGURE 13

(a) Data storage

Output

(b) Data access of the 1st stage of butterfly pattern

Output

(c) Data access of the 2nd stage of butterfly pattern

FIGURE 14

FIGURE 15

|  | ListOps | Text | Retrieval | Image | Pathfinder | Avg. |
|---|---|---|---|---|---|---|
| **Vanilla** *Transformer* | 0.373 | **0.637** | 0.783 | 0.379 | **0.709** | **0.576** |
| **Vanilla** *FNet* | 0.365 | 0.630 | 0.779 | 0.288 | 0.66 | 0.544 |
| *FABNet* | **0.378** | 0.630 | **0.800** | **0.399** | 0.674 | **0.576** |

FIGURE 16

EP 4 261 745 A1

FIGURE 17

26

FIGURE 18

(a) VCU128 FPGA compared with high-end GPUs in terms of speedup and energy efficiency

(b) Zynq 7045 FPGA compared with edge GPU and CPU in terms of speedup and energy efficiency

FIGURE 19

| Accelerators | $A^3$ [17] (HPCA'20) | SpAtten [39] (HPCA'21) | Sanger [25] (MICRO'21) | Energon [44] (TCAD'21) | ELSA [18] (ISCA'21) | DOTA [29] (ASPLOS'22) | FTRANS [24] (ISLPED'20) | Our work |
|---|---|---|---|---|---|---|---|---|
| Technology | ASIC (40nm) | ASIC (40nm) | ASIC (55nm) | ASIC (45nm) | ASIC (40nm) | ASIC (22nm) | FPGA (16nm) | FPGA (16nm) |
| Frequency | 1 GHz | | | | | | 170 MHz | 200 MHz |
| # of Multipliers | 128 | | | | | | 6531 | 640 |
| Latency (ms) | 56.0 | 48.8 | 45.2 | 44.2 | 34.7 | 34.1 | 61.6 | **2.4** |
| Power (W) | 1.217 | 1.060 | 0.801 | 2.633 | 0.976 | 0.858 | 25.130 | 10.727 |
| Energy Eff. (Pred./J) | 14.67 | 19.33 | 27.62 | 8.59 | 29.52 | 34.18 | 0.65 | **40.48** |

FIGURE 20

(a) FABNet-Large with 128 input sequence    (b) FABNet-Large with 1024 input sequence    (c) FABNet-Large with 4096 input sequence

FIGURE 21

Receive input matrix S100

Access data from input matrix using
butterfly sparsity pattern S102

Configure butterfly units of first processor
to perform FFT computation S104

Perform FFT computation using accessed
data S106

FIGURE 22

Apparatus 200

Processing Unit 100

1st Processor 102

2nd Processor 104

3rd Processor 106

Processor(s) 202

Interface(s) 208

Memory 204

ML Model 210

FIGURE 23

Europäisches Patentamt

European Patent Office

Office européen des brevets

# EUROPEAN SEARCH REPORT

Application Number

EP 23 15 0205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAVIER L\'OPEZ-RANDULFE ET AL: "Time-coded Spiking Fourier Transform in Neuromorphic Hardware", ARXIV.ORG, CORNELL UNIVERSITY LIBRARY, 201 OLIN LIBRARY CORNELL UNIVERSITY ITHACA, NY 14853, 31 March 2022 (2022-03-31), XP091174315, DOI: 10.1109/TC.2022.3162708 * page 1 - page 2 * * page 6 * ----- | 1-15 | INV. G06N3/045 G06N3/0499 G06N20/00 G06N3/0442 G06F17/14 |
| A | YAZAN SAMIR ALGNABI ET AL: "FPGA Implementation of pipeline Digit-Slicing Multiplier-Less Radix 2 power of 2 DIF SDF Butterfly for Fourier Transform Structure", ARXIV.ORG, CORNELL UNIVERSITY LIBRARY, 201 OLIN LIBRARY CORNELL UNIVERSITY ITHACA, NY 14853, 9 June 2018 (2018-06-09), XP081238430, * figures 4,5,6 * ----- | 4-6 | |
| A | O'donnell Alan: "Fun matrix math example: the Transformer's attention mechanism - Part 2 (2019) - fast.ai Course Forums", , 30 March 2019 (2019-03-30), XP093056723, Retrieved from the Internet: URL:https://forums.fast.ai/t/fun-matrix-math-example-the-transformers-attention-mechanism/41606/1 [retrieved on 2023-06-22] * page 1 - page 3 * ----- | 9,10,14 | TECHNICAL FIELDS SEARCHED (IPC) G06N G06F |

The present search report has been drawn up for all claims

| Place of search | Date of completion of the search | Examiner |
|---|---|---|
| The Hague | 22 June 2023 | Falco, Gabriele |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. CHEN et al.** Pixelated Butterfly: Simple and Efficient Sparse training for Neural Network Models. *International Conference on Learning Representations,* 2022